# EUROPEAN PATENT SPECIFICATION

(11) **EP 4 390 595 B1**
(45) Date of publication and mention of the grant of the patent: **13.05.2026**
(21) Application number: 21955904.4
(22) Date of filing: 30.08.2021
(51) Int. Cl.: A01D 34/00, G05D 1/243, G05D 1/249, G05D 1/693, G05D 1/698, G05D 105/00, G05D 105/15, G05D 107/20, G05D 109/10, G05D 1/648, G05D 111/10

(54) **WORKING ROBOT MANAGEMENT SYSTEM**
ARBEITSROBOTERVERWALTUNGSSYSTEM
SYSTÈME DE GESTION DE ROBOT DE TRAVAIL

(43) Date of publication of application: 26.06.2024
(73) Proprietor: Yamabiko Corporation, Ohme-shi Tokyo 198-8760 (JP)
(72) Inventor: HIRAKI, Hidenori, Ohme-shi, Tokyo 198-8760 (JP); NAKATSUGI, Koichi, Ohme-shi, Tokyo 198-8760 (JP); ISHII, Miho, Ohme-shi, Tokyo 198-8760 (JP); KOSHIKAWA, Yoshiharu, Wavre, Brabant Walloon Province (BE)
(74) Representative: Canzler & Bergmeier Patentanwälte Partnerschaft mbB
(86) International application number: PCT/JP2021/031768
(87) International publication number: WO 2023/032007

(56) References cited:
- JP-A- 2018 041 435
- JP-A- 2020 042 600
- JP-A- 2020 042 600
- JP-A- 2021 048 665
- US-A1- 2018 275 679
- US-A1- 2021 053 229

## Description

### Technical field

The present invention relates to a working robot management system.

### Background art

Conventionally, as a working robot configured to perform work on a field while autonomously traveling on the field, there have been known a robot mower configured to perform lawn mowing work, and a robot picker configured to collect balls on the field (see Japanese Patent Application Laid-Open No. 2017-176116 and Japanese Patent Application Laid-Open No. 2020-151083).

US 2018/0275679 A1 discloses a robot management system for a swarm of robots assigned to different tasks. If one of the robots fails to finish its work, another robot is elected by the robot management system to finish the work of the failing robot.

US 2021/0053229 A1 discloses, in one embodiment, scout robots to travel among a plurality of plants and capture sensor data about said plants. The sensor data is analysed so that other robots can be instructed to perform agricultural tasks on these plants.

JP 2020-42600 A discloses a robot management system for coordinating a plurality of robots that all can perform security and cleaning (or transporting, etc.) tasks at the same time. For example, while cleaning, these robots perform observation tasks to identify, e.g., moving objects that should not be in the area to be cleaned. If a robot has identified such object, the robot management system then coordinates the plurality of robots such that at least some of these robots can be switched into a special state, e.g., a state where their cleaning task is interrupted to account for the new situation.

### Summary of Invention

### Problem to be solved by the invention

As to the above-described working robot, when a plurality of working robots perform the work on a field, it naturally has to be considered to set working routes for the plurality of working robots not to collide with one another. However, in order to allow the plurality of working robots to perform the individual work smoothly, it is necessary not only to simply prevent the collision, but also to consider an effect of the work of a working robot on the work of other working robots.

In addition, in the case where the plurality of working robots perform the work on the field, it is assumed that a charging base is shared between them. However, in this case, when a working robot uses the shared facility, other working robots cannot use that, and therefore must have a waiting time. Consequently, it is necessary to adjust the schedule of using the shared facility to be efficiently performed the work by the plurality of working robots.

The present invention has been achieved to solve the above-described problems. Therefore, an object of the invention is, for the case where the plurality of working robots perform the work on the field, to allow the plurality of working robots smoothly and efficiently perform individual work, and to allow the plurality of working robots to accomplish the work, in consideration of an effect of the work of one working robot on the work of the other working robot.

### Solution to Problem

To achieve the above-described object, the invention provides a working robot management system according to claim 1. Advantageous embodiments of the invention are described in the dependent claims.

### Effect of the invention

According to the invention having the above-described features, it is possible to allow a plurality of working robots to smoothly and efficiently perform individual work, when the plurality of working robots perform the work on a field. Also, it is possible to allow linkage operation of the plurality of working robots, in consideration of an effect of the work of one working robot on the work of other working robots.

### Brief Description of Drawings

Fig. 1 illustrates an arrangement of a working robot management system according to an embodiment of the invention;
Fig. 2 illustrates the configuration of the working robot management system according to an embodiment of the invention;
Fig. 3 is a block diagram illustrating the system configuration of the working robot management system according to an embodiment of the invention;
Fig. 4 illustrates the functions (program configuration) of a control unit of the working robot management system;
Fig. 5 illustrates an example of stacking shared information in a motion information sharing part;
Fig. 6 illustrates an example of linkage operation of a plurality of working robots;
Fig. 7 illustrates shared information for performing the example of linkage operation illustrated in Fig. 6;
Fig. 8 illustrates an example of the linkage operation (shared information) of the plurality of working robots;
Fig. 9 illustrates an example of the linkage operation of the plurality of working robots ((a) illustrates an example of working in different work areas, and (b) illustrates an example of working in work areas including an overlapping part); and
Fig. 10 illustrates an example of the linkage operation of the plurality of working robots.

### Description of Embodiments

The working robot management system according to an embodiment of the invention is configured to manage the motions of a plurality of working robots performing work while autonomously traveling on a field. This working robot management system includes a motion information sharing part configured to allow sharing of information about the motions of the working robots, and a motion control part configured to control the motions of the working robots based on the information shared by the motion information sharing part. The working robot management system controls the working robots which perform different work among them based on information about at least one of their motions.

The plurality of working robots are configured to perform field management work. For example, at least one of the working robots is a first working robot, and the other is a second working robot. The first working robot is configured to perform collecting work to collect target objects such as balls on the field, and the second working robot is configured to perform the work different from the first working robot, for example, perform mowing work or cleaning work on the field.

Examples of the combination of the first working robot and the second working robot include: a combination of the first working robot configured to gather target objects such as balls together on the field and the second working robot configured to collect the target objects such as balls;
a combination of the first working robot configured to gather the target objects such as balls together and the second working robot configured to perform mowing work or cleaning work on the field; and a combination of the first working robot configured to perform the mowing work or the cleaning work while gathering balls together, and the second working robot configured to perform the collecting work to collect balls.

The plurality of working robots performing the work on the same field share at least one of:
information about the work such as their positions, the traveling routes, and the working situations; and information about the conditions of the working robots such as the remaining amounts of the batteries, the amounts of power consumption, and the charging situations, as time-series information. By this means, it is possible to allow the plurality of working robots to smoothly perform the work, for example, to prevent a collision of the plurality of working robots, to reduce the waiting time to use a facility shared between the plurality of working robots, and to eliminate obstacles to one working robot by the other working robot. Consequently, it is possible to allow the plurality of working robots to smoothly perform different kinds of work on one field, improve the efficiency of the work, or improve the precision of the work.

Hereinafter, an embodiment of the present invention will be described with reference to the drawings. In the description below, the same reference numbers in the different drawings indicate the same functional parts, and therefore repeated description for each of the drawings is omitted.

In the description below, the plurality of working robots include a working robot for performing collecting work to collect target objects on a field, and the other working robot for performing different work on the field. However, the embodiment of the invention is not limited to this. As described above, various combinations of one working robot (first working robot) and the other working robot (second working robot) are possible.

Here, there may be a plurality of first working robots and a plurality of second working robots, and in this case, the number of the working robots is appropriate and required to manage the field. Then, the plurality of second working robots may perform the same kind of work which is different from the work of the first working robots, or may perform various kinds of work which are different from the work of the first working robots.

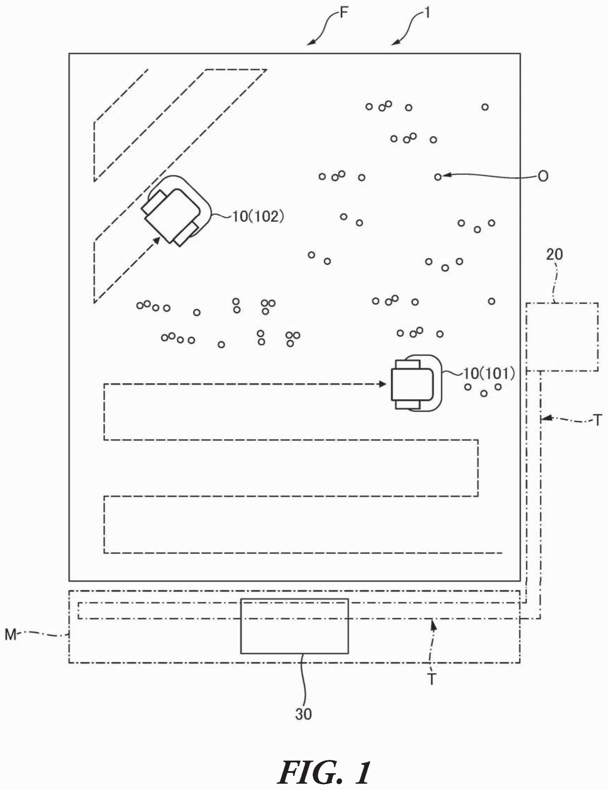

In Fig. 1, two working robots 10 (101, 102), as the above-described first working robot and second working robot, are deployed on a field F. Here, one of the working robots 10 managed by a working robot management system 1, which is the first working robot 10 (101), performs, for example, collecting work to collect target objects O (e.g. balls) scattered on the field F. Meanwhile, the other working robot (second working robot) 10 (102) is configured to perform the work different from the work of the one working robot 10 (101), for example, to perform lawn mowing work on the field F. Here, the field F is a work area in which the collecting work to collect the target objects O and the lawn mowing work are performed.

The working robots 10 (101, 102) perform management work for the field F while autonomously traveling along traveling routes on the field F. The working robot management system 1 recognizes the work area for the working robots 10 (101, 102) as a virtual area based on position information. The work area of the working robots 10 (101, 102) may be an area physically partitioned by a wire and markers. In this case, the position information of the area partitioned by the wire and markers is inputted to the working robot management system 1.

In Fig. 1, a standby place 20 for the working robots 10 (101, 102) to wait is provided around the field F. As an example, the standby place 20 includes a charging base to charge batteries of the electric working robots 10 (101, 102). In addition, the standby place 20 may include a discharge spot where the target objects O collected in the body of the working robot 10 (101) are discharged, or may include both the above-described charging base and the discharge spot. With the illustrated example, the standby place 20 is provided outside the field F, but may be provided in the field F. Here, with the illustrated example, the discharge spot provided in the standby place 20 is connected to a transportation channel T for the target objects O, and the transportation channel T extends to a management facility M near the field F.

For example, in a golf range, the management facility M includes a plurality of hitting boxes to hit the balls as target objects O to the field F, and a feeder to feed the target objects O recovered in the above-described transportation channel T to each of the hitting boxes. The management facility M can know the situation of use of the target objects O, based on, for example, the amount of target objects O fed to each of the hitting boxes, and the amount of recovered target objects O.

The management facility M includes a management device 30 configured to remotely manage the working robots 10 (101, 102) while knowing the situation of use of the target objects O. With the illustrated example, the management device 30 is provided in the management facility M, but alternatively, may be provided in the above-described standby place 20, the working robots 10 (101, 102), or a remote place far from the field F. The installation location of the management device 30 is not limited. The management device 30 is installed to facilitate the management of information about the work and the conditions of the working robots 10 (101, 102) for a user. The management device 30 is, for example, a server, a personal computer, and a personal digital assistant such as a smartphone and a tablet.

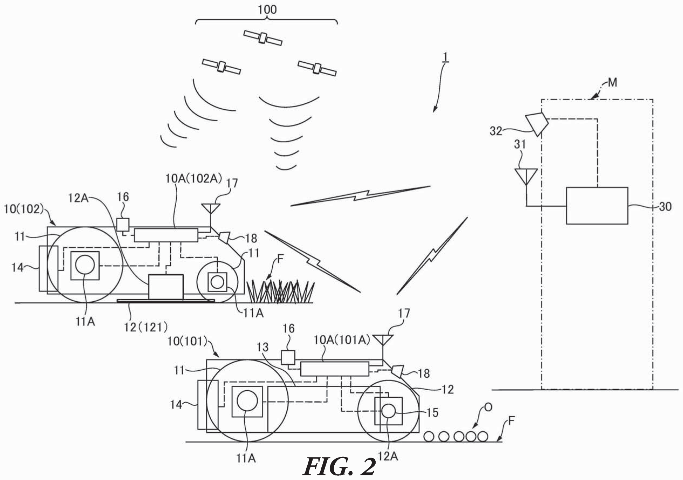

As illustrated in Fig. 2, the working robot management system 1 includes the working robot 10 (101) as a ball picker (working robot for collecting work), the working robot 10 (102) as a mower (working robot for mowing work), and the management device 30.

The first working robot 10 (101) illustrated in Fig. 2 includes: a traveling part 11 having wheels to travel on the field F; a working part (picker) 12 configured to pick up and collect the target objects O on the field F; an accommodation part (reservoir) 13 configured to accommodate the target objects O collected by the working part 12; a controller 10A (101A) configured to control the operation of a traveling drive part (motor) 11A configured to drive the traveling part 11 and the operation of a working drive part (motor) 12A configured to move the working part 12 up and down; and a battery 14 as a power source of the working robot 10 (101).

The traveling part 11 includes right and left traveling wheels. The working robot 10 can move forward and backward, turn right and left, and steer in any direction, under the control of the traveling drive part 11A that individually drives the wheels.

The working part 12 has a mechanism to pick up the target objects O on the field F and put them into the accommodation part 13. One or each of the working part 12 and the accommodation part 13 includes a measurement part 15 configured to measure the amount of the collected target objects O. The measurement part 15 may be a counter configured to count the quantity of the target objects O picked up by the working part 12, a scale configured to measure the quantity or the weight of the target objects O accommodated in the accommodation part 13, or a load meter configured to measure the work load of the working part 12. The information measured by the measurement part 15 is inputted to the controller 10A. Here, a specific example of the controller 10A includes a CPU.

In addition, the working robot 10 includes a position detector 16 for the autonomous travel. As an example of the position detector 16, a GNSS (global navigation satellite system) sensor configured to receive radio signals sent from satellites 100 of a GNSS such as a GPS, or a receiver configured to receive radio waves generated by beacons disposed in or around the field F. Here, a plurality of position detectors 16 may be provided.

To achieve the autonomous travel of the working robot 10, the position detected by the position detector 16 is inputted to the controller 10A, and the controller 10A controls the traveling drive part 11A such that the position of the set traveling route matches the detected position, or the detected position is within the set area.

In order to share information obtained by operating the working robot 10 and information to operate the working robot 10, the working robot 10 includes a communication part 17 configured to transmit and receive the information to and from the working robots 10 one another, or other devices. By using the communication part 17, the working robot 10 transmits and receives the information to and from the above-described management device 30, and the second working robot 10 (102) deployed in the field F. The information received by the communication part 17 is inputted to the controller 10A, and the communication part 17 transmits the information outputted from the controller 10A to the communication partner.

In addition, the working robot 10 includes a camera 18 as an imaging device if necessary. The imaging device may be fixedly mounted on the working robot 10, or the imaging device as a separated device may be individually mounted in addition. In the latter case, a smartphone or a video camera may be mounted on the working robot 10. The camera 18 is configured to capture the image of the field F, and the information of the image captured by the camera 18 is inputted to the controller 10A. It is possible to know the scattering state of the target objects O on the field F, and the surface condition of the field F, based on the image captured by the camera 18.

With the illustrated example, the camera 18 is provided on the working robot 10 as an imaging device to capture the image of the field F. However, the imaging device may be provided in the management facility M or a facility around the field F, or may be mounted on a multicopter and so forth flying above the field F. In this way, when an imaging device mounted on equipment other than the working robot 10, a communication part of the imaging device transmits the image captured by the imaging device to the above-described communication part 17 and a communication part of the management device 30 described later.

Moreover, although the imaging device is provided on the working robot 10 or other equipment to obtain the image of the field F, the imaging device may not necessarily be additionally provided. Alternatively, a system or service to obtain aerial photographs transmitted from satellites in real time may be used. In this case, the communication part of the system or service transmits the obtained image to the communication part 17 and a communication part of the management device 30.

The second working robot 10 (102) illustrated in Fig. 2 is configured to perform, for example, lawn mowing work or cleaning work on the field F. The working robot 10 (102) includes the traveling part 11, the working part 12, the traveling drive part (motor) 11A, the working drive part (motor) 12A, the controller 10A (102A), the battery 14, the position detector 16, the communication part 17, and the camera 18, in the same way as the above-described working robot 10 (101).

The working part 12 of the working robot 10 (102) illustrated in Fig. 2 is a blade device 121 configured to perform the mowing work, but other components are the same as those of the working robot 10 (101), and therefore repeated description is omitted.

The management device 30 provided in the management facility M is a computer provided in the management facility M or a server connected to a network, and includes a communication part 31 configured to transmit and receive information to and from the communication parts 17 of the working robots 10 (101, 102). When the image of the field F is obtained by using a multicopter, the communication part 31 receives the obtained image information. When a camera 32 as an imaging device is provided in the management facility M to capture the image of the field F, the captured image is transmitted to the management device 30 directly or via the communication part 31.

The management device 30 remotely manages the motions of the working robots 10, and also manages the situation of use of the target objects O in the management facility M, and the condition of the lawn on the field F. Here, the situation of use of the target objects O can be managed based on the total amount of managed target objects O, the amount of target objects O fed to each of the hitting boxes, and the amount of recovered target objects O. The condition of the lawn on the field F can be managed based on the captured image of the field F, and information about the work load of the working robot 10 (102).

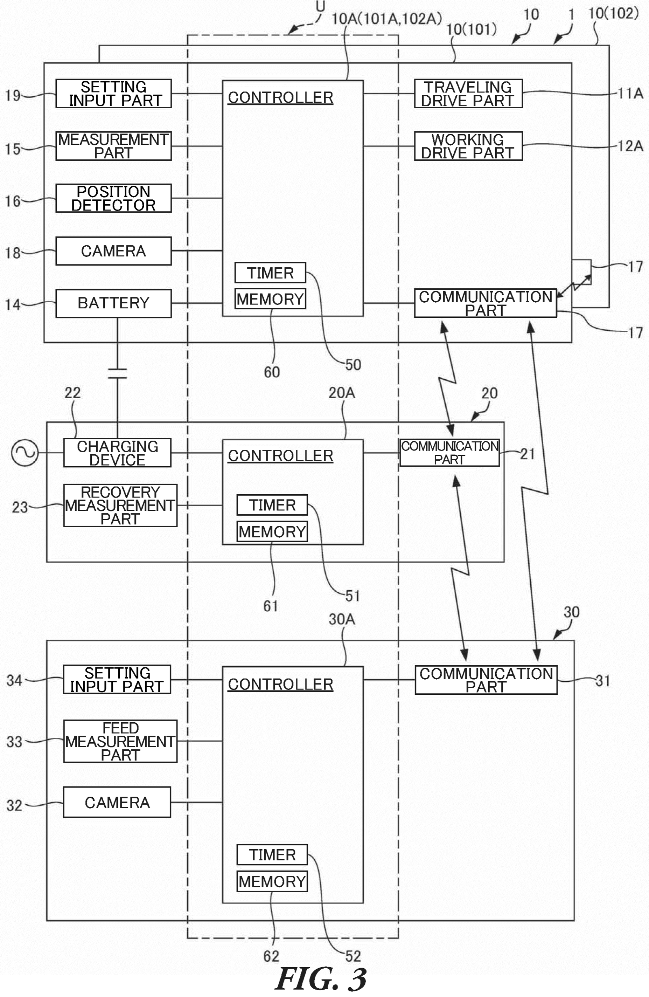

Fig. 3 illustrates an example of the configuration of the working robot management system 1. The controllers 10A (101A, 102A) of the working robots 10 (101, 102) transmit and receive information via the communication parts 17, respectively, as described above, and a controller 30A of the management device 30 transmits and receives information via the communication part 31. In addition, a controller 20A may be provided in the standby place 20 as needed. The controller 20A also transmits and receives information via a communication part 21. A representative example of the controllers 30A and 20A includes a CPU. Here, when each of the controller 20A of the standby place 20 and the controllers 10A (101A, 102A) of the working robots 10 (101, 102) also serves as a management device 30, the management device 30 may be omitted. When the management device 30 is omitted, it is possible to simplify the working robot management system 1 and reduce the cost for introduction and maintenance of the management device 30.

Between the controllers 10A (101A, 102A) of the working robots 10 (101, 102) and the controller 30A of the management device 30, the communication part 17 and the communication part 31 are communicably connected to one another. Between the controller 10A of the working robot 10 and the controller 20A of the standby place 20, the communication part 17 and the communication part 21 are communicably connected to one another. Between the controller 20A of the standby place 20 and the controller 30A of the management device 30, the communication part 21 and the communication part 31 are communicably connected to one another. Here, the communication parts 17, 21, and 31 may be communicably connected to each other directly or via the network. Here, the method of connection for communication is not limited, but wireless or wired connection is possible.

The controllers 10A (101A, 102A), 20A, and 30A include timers 50, 51, and 52 such as RTCs (real-time clocks) configured to measure and output the time, respectively. The timers 50, 51, and 52 are synchronized with each other by using the communication functions of the controllers 10A (101A, 102A), 20A and 30A, and therefore the same time is outputted.

In addition, the controllers 10A (101A, 102A), 20A, and 30A include memories 60, 61, and 62 configured to store information and programs, respectively.

The controllers 10A (101A, 102A), 20A, and 30A constitute one control unit U which is unified by exchanging the information with each other with use of their communication functions, and the functions of the controllers 10A (101A, 102A), 20A, and 30A can be substituted for each other. By this means, the control performed by the working robot management system 1 can be taken on by the controllers 10A (101A, 102A), 20A, and 30A.

The controller 10A (101A) of the working robot 10 (101) receives, as input, for example, work instruction information (the work schedule including information about the work such as the scope of work and the traveling route, and information about the condition such as maintenance information) to set the motion of the working robot 10 (101) from a setting input part 19, information about the amount of the collected target objects O from the measurement part 15, information about the current position of the working robot 10 (101) from the position detector 16, information about the image of the field F from the camera 18, and information about the remaining amount of the battery from the battery 14.

Then, the controller 10A (101A) controls the traveling drive part 11A and the working drive part 12A based on the inputted information and shared information described later, and causes the working robot 10 (101) to operate according to the inputted information and the shared information. The same applies to the working robot 10 (102), and the controller 10A (102A) controls the traveling drive part 11A and the working drive part 12A, and causes the working robot 10 (102) to operate according to the inputted information and the shared information described later.

The controller 20A provided in the standby place 20 receives, as input, charging process information from a charging device 22 configured to charge the battery 14 of the working robots 10 (101, 102). In addition, the controller 20A receives, as input, information about the amount of recovered target objects O which have been discharged to the discharge spot of the standby place 20 from a recovery measurement part 23 installed as needed in the standby place 20. The recovery measurement part 23 measures the number and the weight of the target objects O discharged from the working robot 10 (101) which has returned to the standby place 20.

A setting input part 34 inputs the work instruction information (the work schedule including information about the scope of the work, the traveling route, and the condition such as maintenance) into the controller 30A of the management device 30 to set the motions of the working robots 10 (101, 102). A recovery measurement part 33 installed in the management facility M inputs information about the amount of target objects O recovered into the management facility M into the controller 30A of the management device 30. Also, the camera 32 inputs the information obtained from the image of the field F such as the dispersion state of the target objects O and the lawn condition into the controller 30A of the management device 30. Here, the recovery measurement part 33 measures the number and the weight of the target objects O having been recovered into the management facility M through the transportation channel T.

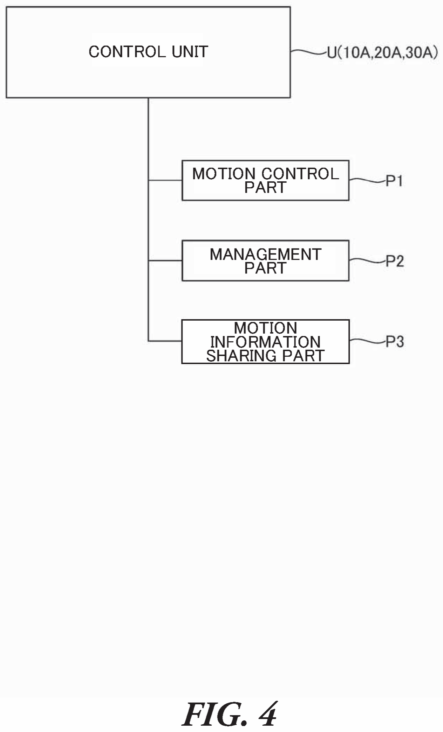

As illustrated in Fig. 4, the control of the control unit U (the controllers 10A (101A, 102A), 20A, and 30A) of the working robot management system 1 includes a motion control part P1 to control the autonomous travel of the traveling part 11 (traveling drive part 11A) and control the motion of the working part 12 (working drive part 12A), a management part P2 to manage the motion and the condition of each of the working robots 10 (101, 102), and a motion information sharing part P3 to share information about the motions and the conditions of the plurality of working robots 10 (101, 102).

Here, the motion control part P1 is a program to control the operation of the control unit U (10A, 20A, 30A). The management part P2 is a program to manage the motion and the condition of each of the working robots 10 (101, 102), and a management schedule to manage the motions and the conditions created accordingly is stored in the memories 60, 61, and 62. The motion information sharing part P3 is a program to allow sharing of the information obtained by operating the working robots 10 (101, 102) and the information (the work schedule) for operating the working robots 10 (101, 102) to control the motions of the working robots (101, 102), and the shared information is stored in the memories 60, 61, and 62.

The motion information sharing part P3 allows sharing of, for example, the information about the work schedule of the working robots 10 (101, 102). To be more specific, the motion information sharing part P3 allows sharing of: the information about the work such as the traveling routes during the work or the non-work, the work areas, and the work hours of the working robots 10 (101, 102); and the information about the conditions such as the remaining amounts of the batteries, charging information, the charging time, and the maintenance information of the working robots 10 (101, 102). When the working robot 10 is the working robot 101 (10) for the collecting work, the information about the conditions also includes at least of the amount of collected target objects O and the discharging of the target objects O. The information about the traveling route during the work or the non-work, the work area, the charging, and the discharging of the target objects O is generated based on the position information on the field F and the time information. In this way, the information about the work schedule for the plurality of working robots 10 (101, 102) is shared, and therefore it is possible to know the whole management work for the field F, and consequently to totally recognize the work of the plurality of working robots 10 (101, 102).

The motion information sharing part P3 may allow sharing of the information from GNSS (GPS) (timing information and the position information corresponding to the time). In particular, when a GNSS using RTK (real time kinetic) positioning (RTK-GNSS) is adopted, it is possible to improve the precision of the linkage control of the plurality of working robots 10 performed by the working robot management system 1. In this case, for example, the same base station is used to detect the positions of the plurality of working robots 10. By this means, it is possible to minimize the displacement using the GNSS, and consequently to link the precise motion control to one another.

In addition, the motion information sharing part P3 allows sharing of the information of the image of the field F captured by the cameras 18 (32) as imaging devices. The image information obtained by capturing the image of the field F by the cameras 18 (32) is shared in combination with the capturing time and the position information of the working robots 10. By this means, it is possible to precisely control the working robots 10 (101, 102), taking into account the situation of the field F.

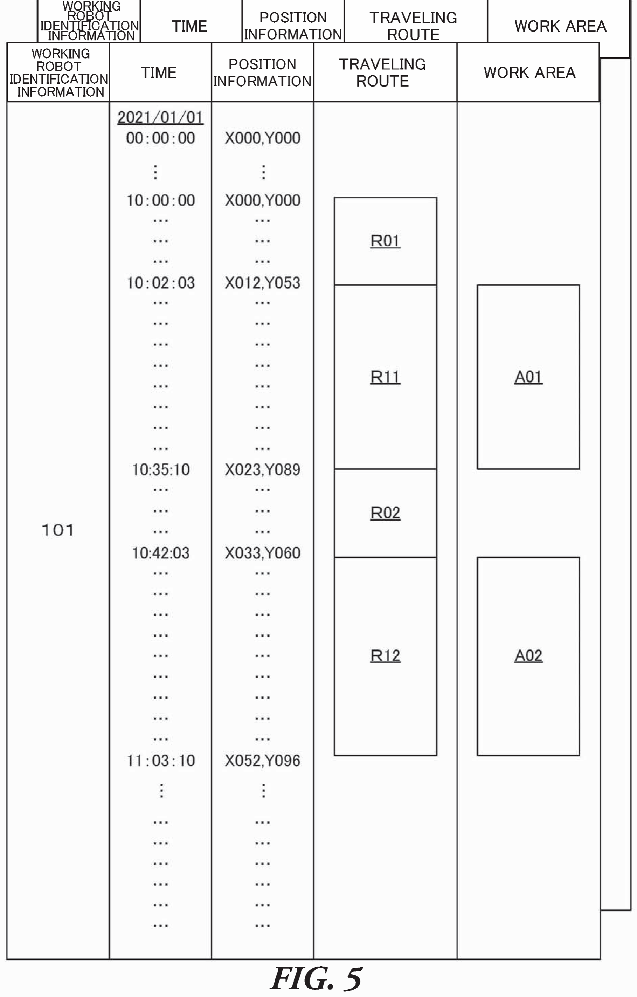

Fig. 5 illustrates an example of stacking the shared information in the motion information sharing part P3. With this example, shared information items are "working robot identification information", "time", "position information", "traveling route", and "work area". "Working robot identification information" is set to each of the working robots 10 (101, 102), and an information table is created for each of the working robots 10 (101, 102). Here, the shared information items are not limited to the above-described items, but an item such as "robot condition" may be appropriately added, or replaced.

"Working robot identification information" is unique particular information assigned to each of the working robots 10 (101, 102). The working robot identification information may be stored in association with information about the types and characteristics of the working robots, for example, type information and characteristic information to specify a robot picker for collecting the target objects O on the field F, a robot mower for the mowing work on the field F, and a robot cleaner for the cleaning work.

"Time" and "position information" before the present time (from past to the present) are information detected by the position detectors 16 of the working robots 10 (101, 102) (using the GNSS (GPS)), which are obtained by operating the working robots 10 (101, 102) from past to the present. Meanwhile, "time" and "position information" after the present time (future) are setting information to operate the working robots 10 (101, 102) from now. "Time" and "position information" as the setting information are replaced with the real detected information over time.

"Traveling route" of the working robot 10 traveling from a certain period of time to a certain period of time is set to correspond to "time" and "position information". This traveling route is information about the work of the working robot 10 virtually generated based on the "time" and "position information". With the illustrated example, the traveling route "R01" is set from the position "X000, Y000" to the position "X012, Y053" for the period of time from "10:00:00" to "10:02:03" on a predetermined date (for example, 2021/01/01). Here, "work area" corresponding to the traveling route "R01" is not set, and therefore the traveling route "R01" is a traveling route during the non-work, for example, the traveling route to move between the standby place 20 and the work area.

"Work area" is a range in which the working robot 10 performs the work, and it is set to correspond to "time" and "position information". Here, the work area is information about the work of the working robot 10 virtually generated based on the "time" and "position information". "Work area" is set to correspond to "time" and "position information", and consequently the work hours, the work start position (the work start time), and the work end position (the work end time) are set.

With the example illustrated in Fig. 5, the work area "A01" is set from the work start position "X012, Y053" to the work end position "X023, Y089" for the period of time from the work start time "10:02:03" to the work end time "10:35:10". In this case, the traveling route "R11" is set to correspond to the work area "A01", and therefore it is the traveling route (working route) for performing the work in the work area "A01".

The motion information sharing part P3 displays the shared information on a screen of a display to allow the user managing the working robot 10 to recognize the shared information. In this case, the screen may be used as an input interface (for touch input) serving as the above-described setting input part 19 (34), or an input interface may be connected to the display. By these means, the user may input the information about the motion of the working robot 10 while looking at the information on the screen. It helps the user to visually recognize the motion of the working robot 10 and set the information.

Hereinafter, the motion control of the working robots 10 (101, 102) performed by the motion control part P1 based on the shared information in the motion information sharing part P3 will be described. Here, the second working robot 10 (102) performs the work linked with the work performed by the first working robot 10 (101). Here, the work performed by the first working robot 10 (101) includes one or more of the work after the present time (future), the work at the present time, and the work before the present time (past). In this way, the link with the work of the second working robot 10 (102) allows both the working robots to efficiently accomplish the work when the work of the working robots 10 is associated with one another, in particular, when the work of the first working robot affects the work of the second working robot.

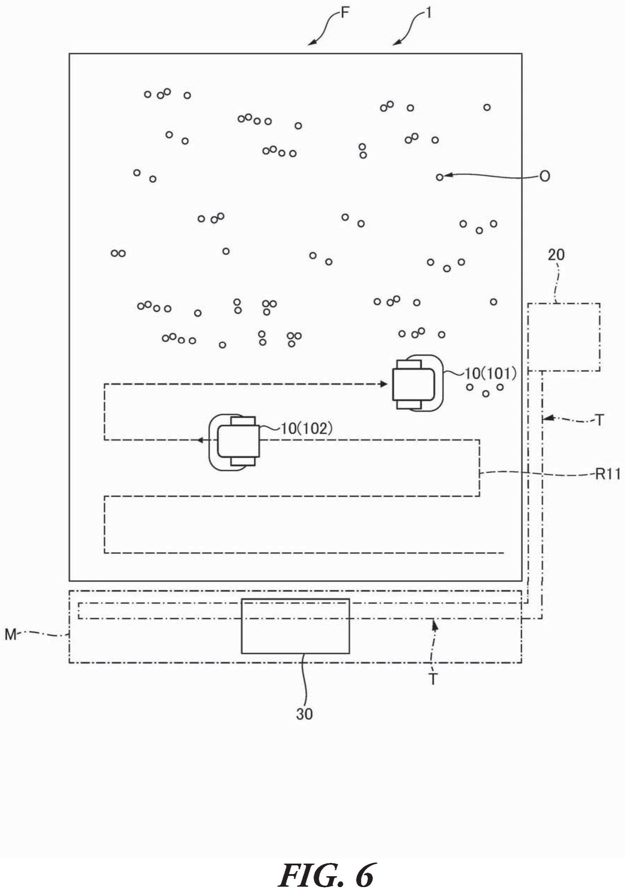

Fig. 6 illustrates an example of the linkage operation that the second working robot 10 (102) performs the work linked with the work performed by the first working robot 10 (101) in the place where the first working robot 10 (101) performed the work. To be more specific, the second working robot 10 (102) performs the work along the traveling route set to follow the traveling route R11 through which the first working robot 10 (101) has traveled. As an example of the linkage operation, the working robot 10 (102) as a robot mower performs the mowing work, tracing the traveling route (working route) through which the working robot 10 (101) as a robot picker has performed the work.

By this means, the working robot 10 (102) performs the mowing work in the place where the working robot 10 (101) has collected the balls (target subjects O) on the field F. Therefore, it is possible to prevent the blade device 121 of the working robot 10 (102) from hitting the balls (target objects O) on the field F and therefore damaging the balls. In addition, the mowing work is performed after the balls as obstacles to the mowing work are removed, and therefore it is possible to prevent the blade device 121 of the working robot 10 (102) from being damaged or broken, and also prevent the field F from being damaged because the working robot 10 (102) runs onto the balls. Consequently, it is possible to improve the work efficiency and the work precision of the mowing work.

In the case where the second working robot 10 (102) performs the cleaning work on the field F, the cleaning work is performed in the place where the working robot 10 (101) has collected the balls (target objects O) on the field F. Therefore, it is possible to prevent a suction part or a blowing part as the working part 12 from hitting the balls (target objects O) on the field F and therefore damaging the balls. In addition, the cleaning work is performed after the balls as obstacles to the cleaning work are removed, and therefore it is possible to prevent the working robot 10 (102) itself from being caused by the second working robot 10 (102) running onto the balls. Consequently, it is possible to improve the work efficiency and the work precision of the cleaning work.

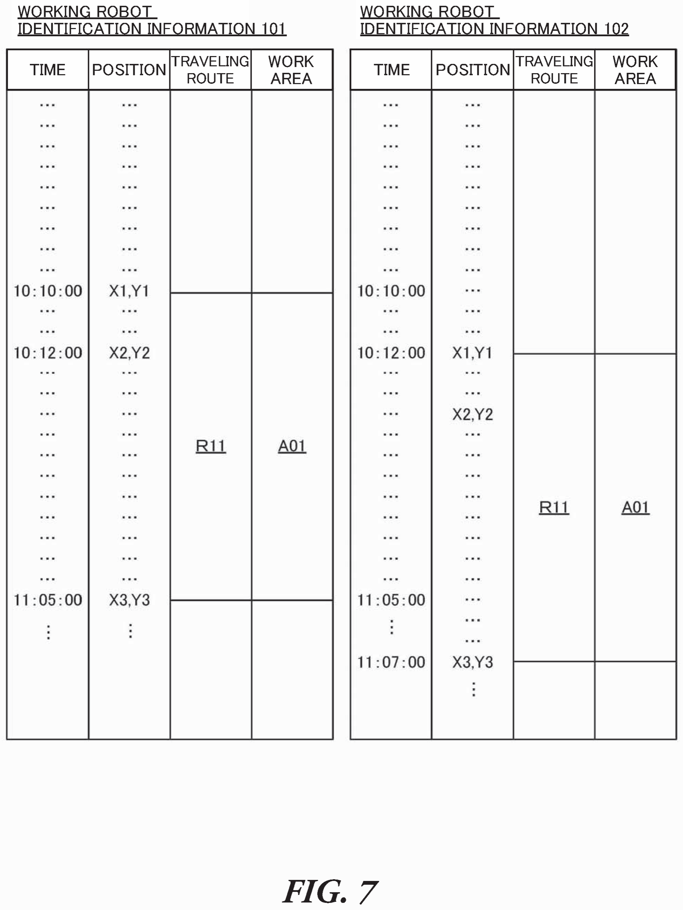

Fig. 7 illustrates the shared information for performing this linkage operation. For the first working robot 10 (101) "working robot identification information 101" and the second working robot 10 (102) "working robot identification information 102", the management part P2 sets the same work area "A01" from the work start position "X1, Y1" to the work end position "X3, Y3", and the same traveling route "R11" in the work area "A01". Here, although the time at the work start position "X1, Y1" of the working robot 10 (101) is "10:10:00", that of the working robot 10 (102) is "10:12:00". That is, the working robot 10 (102) starts the work "00:02:00" later than the working robot 10 (101). In this way, the linkage operation is managed.

When the second working robot 10 (102) performs the work, following the working robot 10 (101) traveling and collecting the balls (target objects O) on the field F, the working robot 10 (101) may discharge the balls to the discharge spot in the standby place 20 during the collecting work depending on the ball collecting situation of the working robot 10 (101). While the working robot 10 (101) goes to the standby place 20 to discharge the balls, and returns to the positon to resume the work, the second working robot 10 (102) may pass the traveling route on which the working robot 10 (101) has done the work. When the second working robot 10 (102) has passed the traveling route through which the work has done, the work efficiency of the second working robot 10 (102) is down, and a risk of running onto the target objects O such as balls and therefore damaging the field F or a risk of damaging the second working robot 10 (102) itself is increased.

The motion control part P1 can avoid the risk by changing the current motion of the second working robot 10 (102) to a different motion, based on the information about the condition of the working robot 10 (101) shared by the motion information sharing part P3. For example, the different motion of the second working robot 10 (102) includes stopping from traveling or working, reducing the speed, and changing the work area and the traveling route. When there is a different working robot 10 performing the collecting work to collect the balls (target objects O) in addition to the working robot 10 (101), the working robot 10 (102) may follow the different working robot 10. The change of the motion in this way reduces the possibility for the second working robot 10(102) to pass the traveling route through which the working robot 10 (101) has done the work.

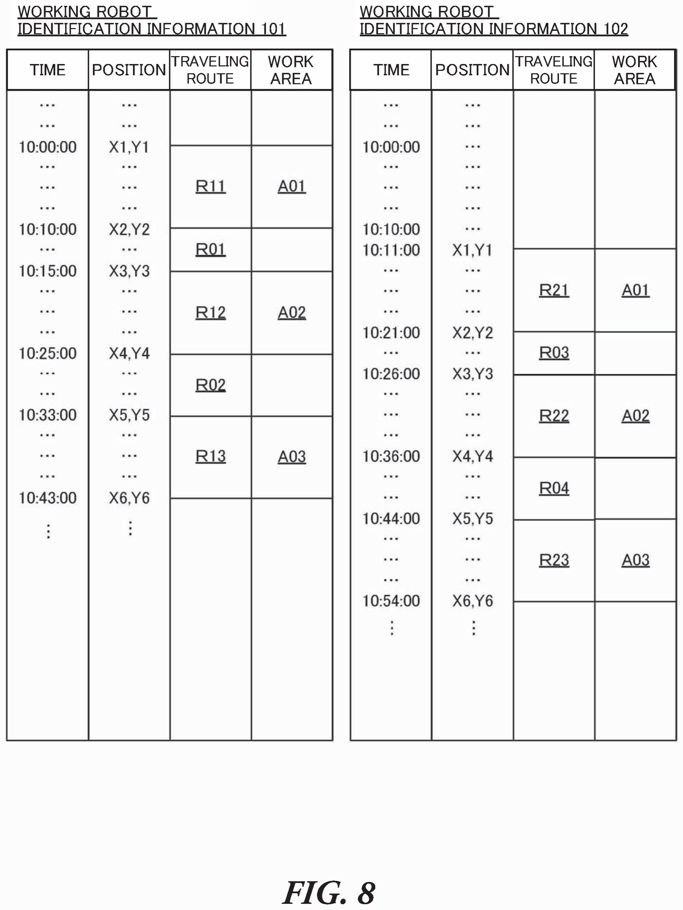

Fig. 8 illustrates an example where the working robot 10 (102) performs the mowing work in the place in which the working robot 10 (101) has done the work to collect the balls (target objects O) on the field F in the same way as the examples illustrated in Fig. 6 and Fig. 7. Here, after the working robot 10 (101) has done the work in a work area "A01", the working robot 10 (102) starts the work in the work area "A01".

In this case, for the first working robot 10 (101) "working robot identification information 101" and the second working robot 10 (102) "working robot identification information 102", the same work areas "A01", "A02", and "A03" are set, but different traveling routes can be set in the work areas "A01", "A02", and "A03", respectively.

With the example illustrated in Fig. 8, the working robot 10 (101) starts the work for the work area "A01" from the work start position "X1, Y1" at the time "10:00:00", performs the work along the traveling route "R11" in the work area "A01", ends the work for the work area "A01" at the time "10:10:00", and moves to the work start position "X3, Y3" of the next work area "A02" along the traveling route "R01".

Then, the working robot 10 (101) starts the work for the work area "A02" from the work start position "X3, Y3" at the time "10:15:00", performs the work in the work area "A02" along a traveling route "R12", ends the work for the work area "A02" at the time "10:25:00", moves to the work start position "X5, Y5" of the next work area "A03" along the traveling route "R02", and performs the work for the work area "A03" along the traveling route "R13".

Meanwhile, the working robot 10 (102) starts the work for the work area "A01" at the time "10:11:00" after the working robot 10 (101) ends the work for the work area "A01" and performs the work in the work area "A01" along the traveling route "R21". Then, the working robot 10 (102) starts the work for the work area "A02" at the time "10:26:00" after the working robot 10 (101) ends the work in the work area "A02"; performs the work in the work area "A02" along the traveling route "R22"; starts the work for the work area "A03" at the time "10:44:00" after the working robot 10 (101) ends the work in the work area "A03"; and performs the work in the work area "A03" along the traveling route "R23".

With this example, it is possible to prevent the blade device 121 of the working robot 10 (102) performing the mowing work from hitting the balls (target objects O) on the field F and therefore damaging the balls in the same way as the example described above. In addition, the mowing work is performed after the balls as obstacles to the mowing work are removed, and therefore it is possible to prevent the blade device 121 of the working robot 10 (102) from being damaged or broken, and also prevent the field F from being damaged caused by the second working robot 10 (102) running onto the balls Consequently, it is possible to improve the work efficiency and the work precision of the mowing work.

Moreover, it is not necessary to correspond the traveling route of the working robot 10 (101) to the traveling route of the working robot 10 (102). Therefore, it is possible for the mowing work of the working robot 10 (102) to set an appropriate traveling route for each of the work areas, and consequently to improve the quality of the mowing work. Furthermore, by actively making it different in the traveling route between the working robot 10 (101) and the working robot 10 (102), it is possible to prevent the surface of the field F from being damaged due to overlap of the tire tracks of the working robots 10.

In this case, by making it different in not only the traveling route in the work area but also the traveling route between the standby place 20 and the work area, and between the work areas, it is possible to further preventing the surface of the field F from being damaged. With the example illustrated in Fig. 8, the traveling route of the working robot 10 (101) between the work areas "A01" and "A02" is "R01", while the traveling route of the working robot 10 (102) between the work areas "A01" and "A02" is "R03" which is different from "R01".

Here, when the start point and the end point of the traveling route "R1" ("R2") are the same as those of the
traveling route "R3" ("R4"), one of the traveling routes is slightly shifted in a specific direction, or a relay point is provided in one of the traveling routes. By this means, it is possible to set the traveling routes not to overlap one another.

With the above-described example, it is premised on that the first working robot 10 (101) and the second working robot 10 (102) perform the work in the same work area, and the time difference is provided in the work schedule, and therefore the linkage operation of the plurality of working robots 10 (101, 102) is effectively performed without interfering with one another.

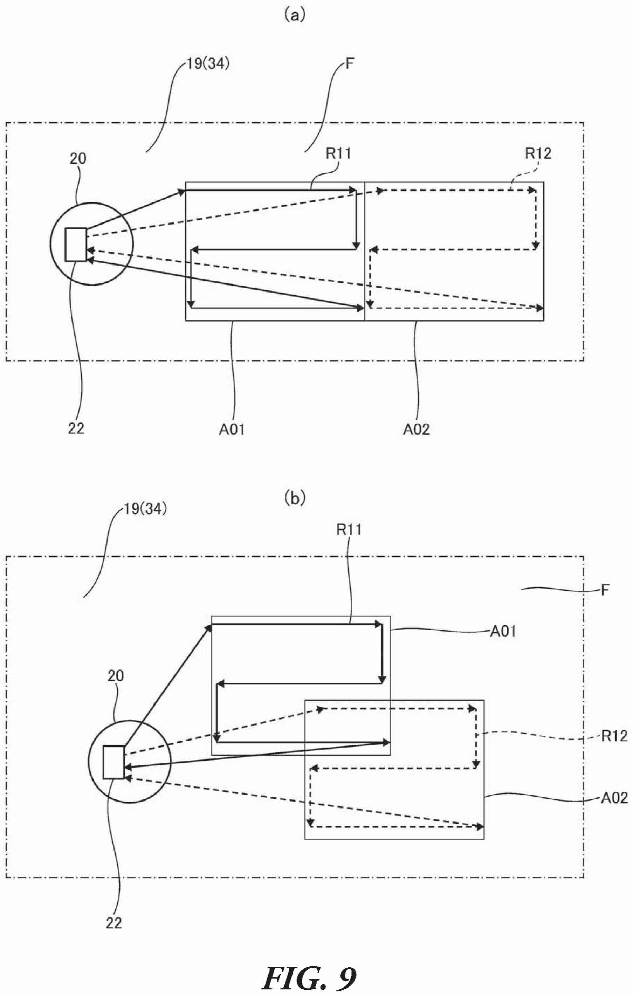

On the other hand, different work areas may be set for the plurality of working robots 10 (101, 102) performing the work for the same period of time, respectively. By this means, the plurality of working robots 10 (101, 102) can perform the work without interfering with one another. As illustrated in Fig. 9(a), the motion control part P1 can set the work area A02 for the working robot 10 (102), which is different from the work area "A01" for the first working robot 10 (101). In this case, it is possible to set the work areas by the input to the screen as the setting input part 19 (34) as described above.

In this case, the traveling routes R11 and R12 in the different work areas A01 and A02 can be set without interference. However, for example, when the charging device 22 in the standby place 20 is shared, in order to prevent the charging time of the working robot 10 (101) from overlapping that of the working robot 10 (102), at least one of the information about the work and the information about the condition such as the remaining amounts of the batteries of the working robot 10 (101) and the working robot 10 (102) is shared, and the timings at which the working robots return to the standby place 20 for charging are set. When not only the charging device 22 is provided in the standby place 20, but also the standby place 20 is set as a discharge spot for the collected target objects O, the frequency at which the working robot 10

(101) uses the standby place 20 is increased. Therefore, in order to prevent the period of times for using the standby place 20 from overlapping one another, the information about the work of the working robot 10 (101), for example, the amount of collected target objects O of the working robot 10 (101) and the information about the condition, for example, the information about the discharge of the collected target objects O are shared, and the timing to use the standby place 20 is set for each of the working robots 10.

Meanwhile, as illustrated in Fig. 9(b), when the work area A01 for the first working robot 10 (101) and the work area A02 for the second working robot 10 (102) partially overlap one another, it is necessary to set different working schedules to operate the working robot 10 (101) and the working robot 10 (102) without interfering with one another. In this case, as an example of the control of the motion control part P1, the traveling routes R11 and R12 are set to operate the second working robot 10 (102) to avoid the first working robot 10 (101). By this means, it is possible not only to avoid collision of the working robots 10 (101, 102) with one another but also to avoid affecting one another's work.

As an example of setting different work schedules to operate the second working robot 10 (102) to avoid first working robot 10 (101), the different traveling routes are set in Fig. 9(b). However, this is by no means limiting. To be more specific, one or more of the work area, the traveling route, and the work time are set to be different.

The example illustrated in Fig. 7 has been described as the linkage operation of the working robots 10 (101, 102), but the second working robot 10 (102) may be operated to avoid the first working robot 10 (101). The first working robot 10 (101) "working robot identification information 101" and the second working robot 10 (102) "working robot identification information 102" perform the work on the different work schedules as illustrated in Fig. 7. That is, they work in the same work area "A01" and along the same traveling route "R11", but the work time (the work start time and the work end time) is different between them.

As another example of performing the work for the different work time, the working robots 10 (101, 102) perform the work on the different work schedules to efficiently and smoothly perform the management work on the field F based on the facility management information, for example, event information such as the business hours and closed dates of the management facility M such as a golf range. For example, the working robot 10 (101) performs the work within the business hours when the number of balls (target objects O) is large on the field F, and the working robot 10 (102) performs the work outside the business hours or on the closed dates when the number of balls (target objects O) is small on the field F. By this means, it is possible to avoid the collision of the working robots 10 (101, 102), and effectively be performed the work by each of the working robots 10 (101, 102) without affecting one another's work.

In addition, the work schedule is set so that the maintenance of the first working robot 10 (101) is conducted outside the business hours or the closed dates when the amount of balls (target objects O) on the field F is small, and the maintenance of the second working robot 10 (102) is conducted within the business hours when the amount of balls (target objects O) on the field F is large. By setting the work schedule in this way, it is possible to reduce accidental failures of the working robots 10 (101, 102), and therefore to safely operate the working robots 10 (101, 102) without posing a problem for the operation of the golf range.

With the example illustrated in Fig. 8, the first working robot 10 (101) "working robot identification information 101" and the second working robot 10 (102) "working robot identification information 102" perform the work on the different work schedules. That is, the work areas "A01", "A02", and "A03" are set for each of the working robots 10 in the same manner, but the traveling route and the work time (the work start time and the work end time) in each of the work areas are different between the first working robot 10 (101) and the second working robot 10 (102). In addition, by simply making the work time different between the working robots 10 (101, 102), it is possible to accomplish the work of each of the working robots 10 (101, 102) without affecting one another's work while preventing the collision of them with one another. Moreover, in Fig. 8, the different traveling routes are set taking into account the damage of the surface of the field F.

Likewise, with the example illustrated in Fig. 9(a), the first working robot 10 (101) and the second working robot 10 (102) perform the work on the different working schedules having the same work time and the different traveling routes. By this means, even though the work is started at the same time, it is possible to perform their work without affecting one another's work. Fig 9 (b) has been described as above.

Moreover, although not illustrated, when the first working robot 10 (101) and the second working robot 10 (102) perform the work in the same work area A01 at the same work start time, different traveling routes may be set to perform the work by the working robots 10 (101, 102) on different work schedules. For example, the work area divided into a plurality of work areas is set to perform the work for each of the divided areas by the working robots 10 (101, 102). Then, after finishing the work for the divided work areas, the working robots 10 (101, 102) exchange the finished work areas between them to perform the work. By this means, it is possible to perform the work of the working robots 10 (101, 102) in the scheduled work areas at the scheduled start time without affecting one another's work while avoiding the collision of the working robots 10 (101, 102).

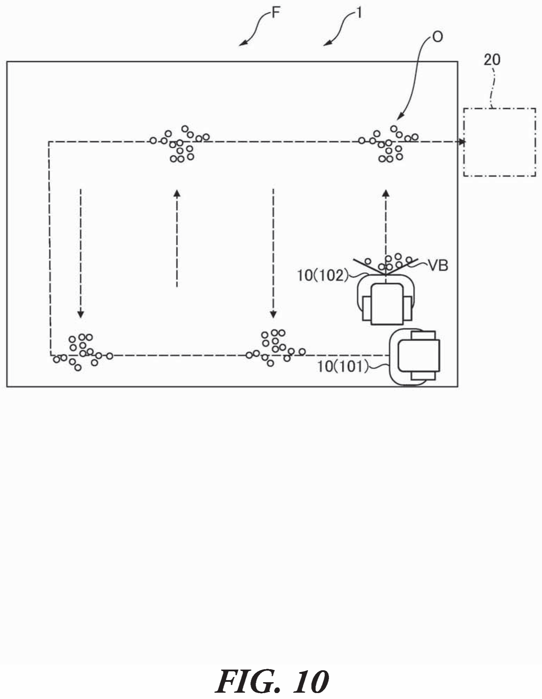

Fig. 10 illustrates an example of the linkage operation of the plurality of working robots 10 (101, 102) when the first working robot 10 (101) performs the work to collect the target objects O on the field F, and the second working robot 10 (102) performs other maintenance work on the field F. In this case, the second working robot 10 (102) may perform the mowing work (robot mower) as described above or other maintenance work such as the cleaning work on the field F (robot cleaner).

With the example illustrated in Fig. 10, the working robot 10 (102) includes a gathering member VB to push and gather the target objects O. By using the gathering member VB the working robot 10 (102) performs gathering work the target objects O at one spot or a plurality of spots. Position information about the places in which the target objects O are gathered is shared information, and the traveling route (working route) of the working robot 10 (101) for performing the collecting work is set based on the shared information. The working robot 10 (101) performs the work to collect (pick up) the target objects O gathered in each of the places. After completing the collecting, the working robot 10 (101) moves to the standby place 20 and discharges the target objects O collected in the robot body to the discharge spot in the standby place 20.

In this case, it is preferred that the traveling route of the working robot 10 (101) is not a complicated traveling route with many corners but a simple straight traveling route with a little corner. By setting the traveling route in this way, the working robot 10 (101) can efficiently collect the target objects O. With this linkage operation, the working robot 10 (102) may gather the target objects O while performing the maintenance work such as the mowing work, and, during the winter season, may perform only the auxiliary work for gathering and collecting without performing the maintenance work. Naturally, the working robot 10 (102) may be a dedicated robot for the auxiliary work for collecting.

As described above, the working robot management system 1 according to the embodiment of the invention controls the linkage operation by managing the motions of the plurality of working robots 10 (101, 102) performing the work while autonomously traveling on the field F. Here, the above-described motion control part P1, management part P2, and motion information sharing part P3 may be provided in the controller 10A of the working robot 10 or in the controller 30A of the management device 30.

When the above-described motion control part P1, management part P2, and motion information sharing part P3 are provided in the controller 10A of the working robot 10, the first working robot 10 (101) controls the motion of the second working robot 10 (102) based on the shared information in the motion information sharing part P3. Meanwhile, when the above-described motion control part P1, management part P2, and motion information sharing part P3 are provided in the controller 30A of the management device 30, the management device 30 controls the motions of the working robots 10 (101, 102) based on the shared information in the motion information sharing part P3.

In this working robot management system 1, the motion control part P2 can control the motions of the working robots 10 (101, 102) to prevent the working robots 10 (101, 102) from interfering with one another based on the shared information in the motion information sharing part P3, and therefore it is possible to reduce time loss due to the interference between the working robots 10 (101, 102). By this means, it is possible to improve the work efficiency of the whole system.

Also, the working robot management system 1 receives information about the positions, the work situations, and the conditions such as the remaining amounts of the batteries of the working robots 10 (101, 102) by the motion information sharing part P3 transmitting it. By this means, the working robot management system 1 is possible to control the motions of each working robot 10 (101, 102) not to use the standby place 20 at the same time, for example, to charge the working robots 10 (101, 102). By this means, even when, for example, the charging device 22 is shared to reduce the facility cost, it is possible to reduce the time loss due to wait for the charging.

In addition, the working robot management system 1 always allows sharing of the motion information of the plurality of working robots 10 (101, 102), and therefore it is possible to allow the linkage operation of the working robots 10 (101, 102), for example, the second working robot 10 (102) performs the work in link with the work performed by the first working robot 10 (101) based on the shared information.

Then, with this linkage operation, for example, as described above, after the working robot 10 (101) has collected the target objects O such as balls, the second working robot 10 (102) follows the traveling route of the first working robot 10 (101) to perform the mowing work on the field F. By this means, with a simple configuration, it is possible to perform the work such as mowing without damaging the target objects O such as balls. In addition, the work such as mowing is performed in the state where the target objects O such as balls as obstacles are removed, and therefore it is possible to efficiently and precisely perform the work.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### Reference Signs List

1: robot management system, 10 (101, 102): working robot,
10A (101A, 102A), 20A, 30A: controller, U: control unit,
11: traveling part, 11A: traveling drive part,
12: working part, 12A: working drive part,
13: accommodation part, 14: battery,
15: measurement part, 16: position detector,
17, 21, 31: communication part, 18, 32: camera,
19, 34: setting input part, 20: standby place,
22: charging device, 23, 33: recovery measurement part,
30: management device, 50, 51, 52: timer,
60, 61, 62: memory, 100: satellite,
P1: motion control part, P2: management part,
P3: motion information sharing part,
F: field, O: target objects,
T: transportation channel, M: management facility

## Claims

1. A working robot management system (1) configured to manage motions of a plurality of working robots (10, 101, 102) performing work while autonomously traveling on a field (F), the working robot management system (1) comprising:
a motion information sharing part (P3) configured to allow sharing of information about the motions of the working robots (10, 101, 102); and
a motion control part (P1) configured to control the motions of the working robots (10, 101, 102) based on the information shared by the motion information sharing part (P3),
wherein the working robot management system (1) controls a second working robot (102) of the working robots (10, 101, 102) which performs a different kind of work than at least a first working robot (101) based on information about a motion of the first working robot (101);
the motion control part (P1) causes the second working robot (102) to perform its work linked with the work performed by the at least first working robot (101);
wherein the motion control part (P1):
causes the second working robot (102) to perform its kind of work in a place where at least the first working robot (101) has done its different kind of work, or
causes the second working robot (102) to follow a traveling route through which at least the first working robot (101) has traveled and to perform its different kind of work.

2. The working robot management system (1) according to claim 1, wherein the motion information sharing part (P3) allows sharing of information about work schedules of the working robots (10, 101, 102).

3. The working robot management system (1) according to claim 1, wherein the motion information sharing part (P3) allows sharing of at least one of information about the work of the working robots (10, 101, 102) and information about conditions of the working robots (10, 101, 102).

4. The working robot management system (1) according to claim 3, wherein the information about the work of the working robots (10, 101, 102) is virtually generated based on position information.

5. The working robot management system (1) according to one of claims 1 to 4, wherein the motion information sharing part (P3) has a screen to display shared information to a user.

6. The working robot management system (1) according to claim 5, wherein the screen is configured to allow information on the screen being viewed by a user, and the screen is configured to allow motions of the working robots (10, 101, 102) being set by the user.

7. The working robot management system (1) according to one of claims 1 to 6, wherein the at least one of the working robots (10, 101, 102) is a working robot for collecting target objects on the field (F), and the second working robot (102) is a working robot to perform other maintenance work on the field (F).

8. The working robot management system (1) according to claim 7, wherein the other maintenance work is mowing work.

9. The working robot management system (1) according to claim 7, wherein the other maintenance work is cleaning work on the field (F).

## Patentansprüche

1. Verwaltungssystem (1) für Arbeitsroboter, das konfiguriert ist, um Bewegungen einer Vielzahl von Arbeitsrobotern (10, 101, 102) zu verwalten, die während des autonomen Fahrens auf einem Feld (F) Arbeit durchführen, wobei das Verwaltungssystem (1) für Arbeitsroboter Folgendes umfasst:
eine Einheit (P3) zum Teilen von Bewegungsinformationen, das konfiguriert ist, um das Teilen von Informationen über die Bewegungen der Arbeitsroboter (10, 101, 102) zu ermöglichen; und
eine Einheit (P1) zur Bewegungssteuerung, das konfiguriert ist, um die Bewegungen der Arbeitsroboter (10, 101, 102) auf der Basis der durch die Einheit (P3) zum Teilen von Bewegungsinformationen geteilten Informationen zu steuern,
wobei das Verwaltungssystem (1) für Arbeitsroboter einen zweiten Arbeitsroboter (102) der Arbeitsroboter (10, 101, 102), der eine andere Art von Arbeit als mindestens ein erster Arbeitsroboter (101) durchführt, auf der Basis von Informationen über eine Bewegung des ersten Arbeitsroboters (101) steuert;
die Einheit (P1) zur Bewegungssteuerung den zweiten Arbeitsroboter (102) veranlasst, seine Arbeit in Verbindung mit der durch den mindestens ersten Arbeitsroboter (101) durchgeführten Arbeit durchzuführen;
wobei die Einheit (P1) zur Bewegungssteuerung:
den zweiten Arbeitsroboter (102) veranlasst, seine Art von Arbeit an einem Ort durchzuführen, an dem mindestens der erste Arbeitsroboter (101) seine andere Art von Arbeit getan hat, oder
den zweiten Arbeitsroboter (102) veranlasst, einer Fahrroute zu folgen, durch die mindestens der erste Arbeitsroboter (101) gefahren ist, und seine andere Art von Arbeit durchzuführen.

2. Verwaltungssystem (1) für Arbeitsroboter nach Anspruch 1, wobei die Einheit (P3) zum Teilen von Bewegungsinformationen das Teilen von Informationen über Arbeitspläne der Arbeitsroboter (10, 101, 102) ermöglicht.

3. Verwaltungssystem (1) für Arbeitsroboter nach Anspruch 1, wobei die Einheit (P3) zum Teilen von Bewegungsinformationen das Teilen von Informationen über die Arbeit der Arbeitsroboter (10, 101, 102) und/oder Informationen über Bedingungen der Arbeitsroboter (10, 101, 102) ermöglicht.

4. Verwaltungssystem (1) für Arbeitsroboter nach Anspruch 3, wobei die Informationen über die Arbeit der Arbeitsroboter (10, 101, 102) virtuell auf der Basis von Positionsinformationen erzeugt werden.

5. Verwaltungssystem (1) für Arbeitsroboter nach einem der Ansprüche 1 bis 4, wobei die Einheit (P3) zum Teilen von Bewegungsinformationen einen Bildschirm aufweist, um einem Benutzer geteilte Informationen anzuzeigen.

6. Verwaltungssystem (1) für Arbeitsroboter nach Anspruch 5, wobei der Bildschirm konfiguriert ist, um das Betrachten von Informationen auf dem Bildschirm durch einen Benutzer zu ermöglichen, und der Bildschirm konfiguriert ist, um das Festlegen von Bewegungen der Arbeitsroboter (10, 101, 102) durch den Benutzer zu ermöglichen.

7. Verwaltungssystem (1) für Arbeitsroboter nach einem der Ansprüche 1 bis 6, wobei der mindestens eine der Arbeitsroboter (10, 101, 102) ein Arbeitsroboter zum Sammeln von Zielobjekten auf dem Feld (F) ist und der zweite Arbeitsroboter (102) ein Arbeitsroboter zum Durchführen anderer Wartungsarbeiten auf dem Feld (F) ist.

8. Verwaltungssystem (1) für Arbeitsroboter nach Anspruch 7, wobei die anderen Wartungsarbeiten Mäharbeiten sind.

9. Verwaltungssystem (1) für Arbeitsroboter nach Anspruch 7, wobei die anderen Wartungsarbeiten Reinigungsarbeiten auf dem Feld (F) sind.

## Revendications

1. Système de gestion de robot de travail (1) configuré pour administrer des mouvements d'une pluralité de robots de travail (10, 101, 102) exécutant un travail tout en se déplaçant de manière autonome sur un champ (F), le système de gestion de robot de travail (1) comprenant :
une partie de partage d'informations de mouvement (P3) configurée pour permettre partager des informations sur les mouvements des robots de travail (10, 101, 102) ; et
une partie de contrôle de mouvement (P1) configurée pour contrôler les mouvements des robots de travail (10, 101, 102) sur la base des informations partagées par la partie de partage d'informations de mouvement (P3),
dans lequel le système de gestion de robot de travail (1) contrôle un second robot de travail (102) des robots de travail (10, 101, 102) qui exécute un type de travail différent d'au moins un premier robot de travail (101) sur la base d'informations sur un mouvement du premier robot de travail (101) ;
la partie de contrôle de mouvement (P1) amène le second robot de travail (102) à exécuter son travail lié au travail exécuté par l'au moins premier robot de travail (101) ;
dans lequel la partie de contrôle de mouvement (P1) :
amène le second robot de travail (102) à exécuter son type de travail à un endroit où au moins le premier robot de travail (101) a effectué son type de travail différent, ou
amène le second robot de travail (102) à suivre une route itinérante à travers laquelle au moins le premier robot de travail (101) s'est déplacé et à exécuter son type de travail différent.

2. Système de gestion de robot de travail (1) selon la revendication 1, dans lequel la partie de partage d'informations de mouvement (P3) permet de partager des informations sur des programmes de travail des robots de travail (10, 101, 102).

3. Système de gestion de robot de travail (1) selon la revendication 1, dans lequel la partie de partage d'informations de mouvement (P3) permet de partager au moins l'une d'informations sur le travail des robots de travail (10, 101, 102) et d'informations sur des conditions des robots de travail (10, 101, 102).

4. Système de gestion de robot de travail (1) selon la revendication 3, dans lequel les informations sur le travail des robots de travail (10, 101, 102) sont générées virtuellement sur la base d'informations de position.

5. Système de gestion de robot de travail (1) selon l'une des revendications 1 à 4, dans lequel la partie de partage d'informations de mouvement (P3) a un écran pour afficher des informations partagées à un utilisateur.

6. Système de gestion de robot de travail (1) selon la revendication 5, dans lequel l'écran est configuré pour permettre à des informations sur l'écran d'être visualisées par un utilisateur, et l'écran est configuré pour permettre à des mouvements des robots de travail (10, 101, 102) d'être définis par l'utilisateur.

7. Système de gestion de robot de travail (1) selon l'une des revendications 1 à 6, dans lequel l'au moins un des robots de travail (10, 101, 102) est un robot de travail pour collecter des objets cibles sur le champ (F), et le second robot de travail (102) est un robot de travail pour exécuter d'autres travaux de maintenance sur le champ (F).

8. Système de gestion de robot de travail (1) selon la revendication 7, dans lequel l'autre travail de maintenance est un travail de tondeuse.

9. Système de gestion de robot de travail (1) selon la revendication 7, dans lequel l'autre travail de maintenance est un travail de nettoyage sur le champ (F).
